# EUROPÄISCHE PATENTANMELDUNG

(11) **EP 0 955 200 A2**
(43) Veröffentlichungstag der Anmeldung: **10.11.1999**
(21) Anmeldenummer: 99104238.3
(22) Anmeldetag: 03.03.1999
(51) Int. Cl.: B60K 37/02

(54) **Kombiinstrument mit Heilungsfunktion**

(30) Priorität: 04.05.1998 DE 19819822
(71) Anmelder: ROBERT BOSCH GMBH, 70442 Stuttgart (DE)
(72) Erfinder: Mueller, Jens-Olaf, 71229 Leonberg (DE); Friedl, Bernhard, 71272 Renningen (DE)

(57) **Zusammenfassung**

Die Erfindung schafft ein integriertes Kombiinstrument zum Anzeigen von unterschiedlichen Meßdaten in einem Kraftfahrzeug, das mit analogen und/oder digitalen Anzeigeinstrumenten bestückt ist, mit einer Einrichtung zur Ansteuerung der Anzeigeinstruinente und zum Durchführen einer oder mehrerer weiterer Funktionen der Karosseriezentralelektronik und/oder Karosserieleistungselektronik und mit mindestens einer integrierten Sicherungseinrichtung (50) für die Einrichtung, wobei die Sicherungseinrichtung (50) eine Heilungsfunktion aufweist.

## Beschreibung

### STAND DER TECHNIK

Die vorliegende Erfindung betrifft ein integriertes Kombiinstrument zum Anzeigen von unterschiedlichen Meßdaten in einem Kraftfahrzeug, das mit analogen und/oder digitalen Anzeigeinstrumenten bestückt ist, mit einer Einrichtung zur Ansteuerung der Anzeigeinstrumente und zum Durchführen einer oder mehrerer weiterer Funktionen der Karosseriezentralelektronik und/oder Karosserieleistungselektronik und mit mindestens einer integrierten Sicherungseinrichtung für die Einrichtung.

Solch ein Kombiinstrument ist beispielsweise aus der älteren Anmeldung DE 198 02 465.7, welche am 23.1.98 angemeldet wurde, bekannt.

Bei diesem bekannten integrierten Kombiinstrument sind die Funktionen des Elektronikmoduls, welches zweckmäßigerweise eine Leiterplatte als Träger von den Bauelementen der elektronischen Ansteuerung der Anzeigeinstrumente aufweist, von den optomechanischen Funktionen, nämlich den mechanischen und elektrischen Verbindungen für Beleuchtungen der Anzeigeinstrumente sowie Zeigerantrieb und Zeigerlagerung usw., getrennt.

Um weitere Fahrgastraumfunktionen in Verbindung mit solch einem Kombiinstrument zur Verfügung zu stellen, ist zusätzlich die besagte Integration von Fahrgastraumfunktionen der Karosseriezentralelektronik (Schalterfassung, Verbrauchersteuerung, Wegfahrsperre usw.) und/oder der Karosserieleistungselektronik (Halbleiterendstufen, Relais und Sicherungen) vorgesehen worden.

Besondere Anforderungen werden in diesem Zusammenhang an die Anordnung der Sicherungen gestellt, da diese Komponenten häufiger als andere Komponenten ausgewechselt werden müssen.

In der DE 198 02 455.7 wird vorgeschlagen, eine entfernbare Abdeckung zum Abdecken eines Bereichs mit den Sicherungen, d.h. üblichen Schmelzsicherungen, vorzusehen. Damit läßt sich dieser Bereich im Normalzustand verblenden und im Bedarfsfall schnell zugänglich machen. Die entfernbare Abdeckung zum Abdecken des Bereichs mit den Sicherungen weist zweckmäßigerweise eine Klappe mit Scharnier oder eine Klipsabdeckung oder eine starre Abdeckung, welche mit der Lenksäule abgeklappt werden kann, auf.

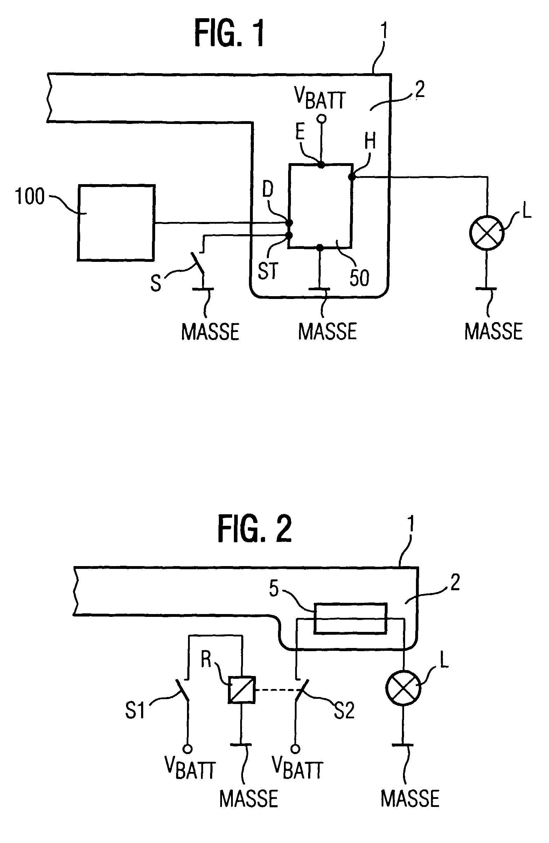

Fig. 2 ist eine schematische Darstellung der zur Erläuterung der der Erfindung zugrundeliegenden Problematik wesentlichen Komponenten der Ausführungsform eines üblichen integrierten Kombiinstruments.

In Fig. 2 bezeichnen 1 ein integriertes Kombiinstrument mit einem Sicherungsbereich 2, in dem eine Sicherung 5 vorgesehen ist. Die Sicherung 5 liegt im Sekundärstromkreis einer Relaisanordnung zwischen dem sekundären Relaisschalter S2 und einer Last L. Die Spannungsversorgung ist durch die Potentiale V_{BATT} und MASSE angedeutet. Der sekundäre Relaisschalter S2 wird vom Relaismagneten R gesteuert, der im Primärstromkreis der Relaisanordnung mit dem primären Relaisschalter S1 liegt. Tritt nach dem Einschalten von S2 über S1 beispielsweise ein Kurzschluß auf der Seite des Versorgungspotentials V_{BATT} der Last L gegen Masse auf, so schmilzt die Sicherung und muß ausgetauscht werden.

Obwohl diese bekannte Lösung prinzipiell funktioniert, weist die einige Nachteile auf. Insbesondere muß die als Folge eines Kurzschlusses durchgebrannte Schmelzsicherung 5 gut zugänglich sein, was die Anordnungsmöglichkeiten einschränkt. Das Elektronikmodul kann hierfür über den Bereich mit der elektronischen Ansteuerung der Anzeigeinstrumente hinaus um den Bereich mit den Sicherungen in Richtung der Lenksäule verlängert werden. Dies erhöht jedoch die Größe. Weiterhin ist die vorzusehende entfernbare Abdeckung ein zusätzliches Element, das Kosten verursacht und die Design- bzw. Layoutfreiheit stört.

Die erwähnten Probleme behindern die Einführung der integrierten Kombiinstrumente trotz ihrer allgemeinen Kostenvorteile für den Kunden stark.

### VORTEILE DER ERFINDUNG

Das erfindungsgemäße Kombiinstrument mit den Merkmalen des Anspruchs 1 weist den besonderen Vorteil auf, daß eine Zugänglichkeit der Sicherungseinrichtung nicht länger erforderlich ist, was die Designeinschränkungen für den Kunden gänzlich aufhebt. Außerdem fällt nicht nur die entfernbare Abdeckung weg, sondern auch eine nebeneinanderliegende Anordnung der einzelnen Sicherungseinrichtungen, also der klassische Sicherungskasten, ist nicht mehr erforderlich.

Die der vorliegenden Erfindung zugrundeliegende Idee besteht darin, daß die Sicherungseinrichtung eine Heilungsfunktion aufweist. Darunter soll verstanden werden, daß selbst im Fall einer aufgrund eines Kurzschlusses durch die Sicherungseinrichtung veranlaßten Unterbrechung des betreffenden Stromkreises kein Austausch der Sicherungseinrichtung vorgesehen ist, sondern die Sicherung sich entweder selbstheilend reaktiviert oder durch ein externes elektronisches oder sonstiges Steuersignal heilbar ist, wenn der Kurzschluß beseitigt ist.

In den Unteransprüchen finden sich vorteilhafte Weiterbildungen und Verbesserungen des in Anspruch 1 angegebenen integrierten Kombiinstruments.

Gemäß einer bevorzugten Weiterbildung weist die Einrichtung ein Elektronikmodul mit mindestens einem Bereich auf, worauf die mindestens eine Sicherungseinrichtung angeordnet ist. Dies hat den. Vorteil, daß die Sicherungseinrichtung(en) in diesem Elektronikmodul vormontiert werden können.

Gemäß einer weiteren bevorzugten Weiterbildung sind mechanische, optische und elektrische Bauteile der Anzeigeinstrumente auf einer Trägerplatte vorgesehen und ist das Elektronikmodul mit der Trägerplatte verbindbar. Damit sind die Anzeigeinstrumente und die Sicherungseinrichtung(en) unabhängig voneinander vormontierbar.

Gemäß einer weiteren bevorzugten Weiterbildung weist das Elektronikmodul eine Leiterplatte auf, die in direkten Kontakt mit der Trägerplatte bringbar ist. Damit kann man sich zusätzliche Verbindungsleitungen ersparen.

Gemäß einer weiteren bevorzugten Weiterbildung sind Bauteile der Karosseriezentralelektronik und/oder Karosserieleistungselektronik und/oder die Sicherungseinrichtung auf der dem Fahrgastraum abgewandten Seite der Leiterplatte angebracht. Auf dieser Seite ist entsprechender Platz dafür vorhanden, der früher wegen des Erfordernisses der Zugänglichkeit von vorne nicht nutzbar war.

Gemäß einer weiteren bevorzugten Weiterbildung weist die Sicherungseinrichtung einen Polyswitch auf. Der Polyswitch (z.B. von der Raychem Corporation) ist eine Halbleitersicherung, die den Strom sperrt, sobald ein Kurzschluß entsteht, und sich dann wieder selbst heilt, wenn der Kurzschluß behoben ist. Der Polyswitch umfaßt einen Widerstand mit positivem Temperaturkoeffizienten, der eine große abrupte Widerstandswertänderung erfährt, wenn ein Überstrom oder eine Übertemperatur ihn über seine Übergangstemperatur bringt. Üblicherweise beträgt der Widerstandswert eines Polyswitch im leitenden Zustand einige zehntel Ohm und im Sperrzustand einige Größenordnungen mehr.

Üblicherweise setzt sich der Polyswitch zurück (Heilung), wenn die Spannungsversorgung entfernt wird oder wenn die Überlastbedingung wegfällt. Nach dem Schalten wird der Polyswitch durch einen Selbstheizstrom im hochohmigen Zustand gehalten, um ein kontinuierliches Hin- und Herschalten und eine damit möglicherweise verbundene Beschädigung der zu schützenden Schaltung zu verhindern.

Polyswitches, welche bisher nur bis zu Stromstärken von 5 A verfügbar waren, werden von jetzt an für Stromstärken von 5 bis 50 A, insbesondere 20 bis 30 A, erhältlich sein. Aufgrund der hohen Nachfrage in diesem Stromabsicherungsbereich werden die Kosten dieser Bauelemente bald rapide fallen.

Die selbstätige Heilbarkeit der Polyswitches ist ein für den Kunden technisch erlebbarer Vorteil, so daß sogar ein gegenüber der üblichen Schmelzsicherung leicht erhöhter Preis hingenommen werden wird, der ohnehin durch andere Begleiteffekte kompensierbar ist.

Gemäß einer weiteren bevorzugten Weiterbildung ist die Sicherungseinrichtung in einen Halbleiterschalter für die Last integriert. Dies ermöglicht eine Kombination von Sicherung und Schalter und bringt somit eine Platzersparnis, denn aus zwei Komponenten wird dadurch eine einzige Komponente.

Gemäß einer weiteren bevorzugten Weiterbildung weist der Halbleiterschalter einen Highsideschalter mit einer Diagnosefunktion auf. Solche Smartpowerschalter sind Leistungstreiber mit integrierter Sicherung und Diagnosefunktion, die u.a. angibt, ob ein Kurzschluß vorliegt oder nicht.

Gemäß einer weiteren bevorzugten Weiterbildung ist die Sicherungseinrichtung durch ein elektronisches Steuersignal, vorzugsweise von einem Bordcomputer, heilbar.

Gemäß einer weiteren bevorzugten Weiterbildung ist die Sicherungseinrichtung durch eine Selbstheilungsfunktion heilbar. Dies erspart ein zusätzliches Rücksetzsignal.

Gemäß einer weiteren bevorzugten Weiterbildung sind sämtliche benötigten Sicherungseinrichtungen darin vorgesehen. Mit anderen Worten sind dann alle Sicherungen für die Einrichtung zur Ansteuerung der Anzeigeinstrumente und zum Durchführen der Funktionen der Karosseriezentralelektronik und/oder Karosserieleistungselektronik im Kombiinstrument untergebracht.

### ZEICHNUNGEN

Ausführungsbeispiele der Erfindung sind in den Zeichnungen dargestellt und in der nachfolgenden Beschreibung näher erläutert.

### Es zeigen:

- Fig. 1: eine schematische Darstellung der zur Erläuterung der Erfindung wesentlichen Komponenten einer Ausführungsform des erfindungsgemäßen integrierten Kombiinstruments; und
- Fig. 2: eine schematische Darstellung der zur Erläuterung der der Erfindung zugrundeliegenden Problematik wesentlichen Komponenten der Ausführungsform eines üblichen integrierten Kombiinstruments.

### BESCHREIBUNG DER AUSFUHRUNGSBEISPIELE

In den Figuren bezeichnen gleiche Bezugszeichen gleiche oder funktionsgleiche Komponenten.

Fig. 1 ist eine schematische Darstellung der zur Erläuterung der Erfindung wesentlichen Komponenten einer Ausführungsform des erfindungsgemäßen integrierten Kombiinstruments.

In Fig. 1 bezeichnen 50 einen Highsideschalter, E einen Versorgungspotentialeingang von 50, H einen Versorgungspotentialausgang von 50, D einen Diagnoseausgang von 50, ST einen Steuereingang von 50, S einen Schalter und 100 einen Bordcomputer.

Das in Fig. 1 gezeigte integrierte Kombiinstrument zum Anzeigen von unterschiedlichen Meßdaten in einem Kraftfahrzeug, das mit (nicht dargestellten) analogen und digitalen Anzeigeinstrumenten bestückt ist, weist eine Einrichtung zur Ansteuerung der Anzeigeinstrumente und weiteren Funktionen der Karosseriezentralelektronik und Karosserieleistungselektronik auf. Ein Beispiel einer solchen Funktion der Karosseriezentralelektronik ist die Ansteuerung der außerhalb des Kombiinstruments gelegenen Last L.

Diese Ansteuerung geschieht über den Highsideschalter 50, der zweckmäßigerweise ein Smartpowerschalter ist. Gleichzeitig zur Ansteuerfunktion hat dieser Highsideschalter 50 die Funktion einer Sicherungseinrichtung, die eine Heilungsfunktion aufweist.

Der Betrieb dieser Ausführungsform verläuft folgendermaßen. Beim Schließen des Schalters S ändert sich das Potential am Steuereingang ST des Highsideschalters 50. Dies bewirkt, daß das an den Versorgungspotentialeingang E angelegte Versorgungspotential V_{BATT} zum Versorgungspotentialausgang H und von dort zur Last L durchgeschaltet wird.

Tritt nun ein Kurzschluß der Last L auf, so wird dies von einer im Highsideschalter 50 vorgesehenen Überwachungsschaltung erfaßt und als Reaktion darauf das Versorgungspotential V_{BATT} Vom Versorgungspotentialausgang H und daher von der Last L abgekoppelt. Gleichzeitig wird dieser Zustand über den Diagnoseausgang D an den Bordcomputer 100 gemeldet. Ein Einschalten der Last L ist nun nicht mehr möglich. Erst nach Wegfall der Kurzschlußbedingung kann wieder ein normaler Schaltbetrieb stattfinden. Aufgrund der kurzen Ansprechzeit wird so eine Beschädigung der Schaltung vermieden.

Zweckmäßigerweise weist die im Kombiinstrument 1 vorgesehene Einrichtung zur Ansteuerung der Anzeigeinstrumente und zum Durchführen einer oder mehrerer weiterer Funktionen der Karosseriezentralelektronik und/oder Karosserieleistungselektronik ein Elektronikmodul mit mindestens einem Bereich auf, worauf die Sicherungseinrichtungen angeordnet sind. Mechanische, optische und elektrische Bauteile der Anzeigeinstrumente hingegen sind auf einer separaten Trägerplatte vorgesehen, mit der das Elektronikmodul verbindbar ist. Das Elektronikmodul selbst besteht im einfachsten Fall aus einer Leiterplatte, die in direkten Kontakt mit dieser Trägerplatte bringbar ist.

Insbesondere sind im vorliegenden Fall die Sicherungseinrichtung 50 sowie weitere nicht gezeigte Sicherungseinrichtungen zweckmäßigerweise auf der dein Fahrgastraum abgewandten Seite der Leiterplatte angebracht.

Sicherungseinrichtungen für interne Komponenten des Kombiinstruments sind in örtlicher Nähe zu dem betreffenden abzusichernden Teil eingebaut. Damit fallen zusätzliche Verdrahtungen weg. Auch ist die Zuordnungsfähigkeit von Sicherungseinrichtung und zu schützender Schaltung verbessert. Ansonsten ist die Anordnung beliebig, und keinesfalls mehr das klassische Sicherungsfeld erforderlich.

Obwohl die vorliegende Erfindung vorstehend anhand eines bevorzugten Ausführungsbeispiels beschrieben wurde, ist sie nicht darauf beschränkt, sondern auf vielfältige Art und Weise modifizierbar.

Insbesondere ist die Sicherungseinrichtung nicht auf einen Highsideschalter beschränkt, sondern kann auch einen Polyswitch, der durch eine Selbstheilungsfunktion heilbar ist, oder eine andere übliche Sicherungseinrichtung mit aktiver oder passiver Heilungsfunktion aufweisen.

Auch kann die Sicherungseinrichtung derart beschaffen sein, daß sie durch ein elektronisches Steuersignal von dem Bordcomputer 100 heilbar ist, und die Rücksetzsteuerung nicht in sich integriert hat. Wichtig ist lediglich, daß sie als Komponente nach einem Kurzschluß nicht ausgetauscht werden muß.

## Patentansprüche

1. Integriertes Kombiinstrument zum Anzeigen von unterschiedlichen Meßdaten in einem Kraftfahrzeug, das mit analogen und/oder digitalen Anzeigeinstrumenten bestückt ist, mit einer Einrichtung zur Ansteuerung der Anzeigeinstrumente und zum Durchführen einer oder mehrerer weiterer Funktionen der Karosseriezentralelektronik und/oder Karosserieleistungselektronik und mit mindestens einer integrierten Sicherungseinrichtung (50) für die Einrichtung,
dadurch **gekennzeichnet,** daß
die Sicherungseinrichtung (50) eine Heilungsfunktion aufweist.

2. Integriertes Kombiinstrument nach Anspruch 1, dadurch gekennzeichnet, daß die Einrichtung ein Elektronikmodul mit mindestens einem Bereich aufweist, worauf die mindestens eine Sicherungseinrichtung (50) angeordnet ist.

3. Integriertes Kombiinstrument nach Anspruch 2, dadurch gekennzeichnet, daß mechanische, optische und elektrische Bauteile der Anzeigeinstrumente auf einer Trägerplatte vorgesehen sind und das Elektronikmodul mit der Trägerplatte verbindbar ist.

4. Integriertes Kombiinstrument nach Anspruch 3, dadurch gekennzeichnet, daß das Elektronikmodul eine Leiterplatte aufweist, die in direkten Kontakt mit der Trägerplatte bringbar ist.

5. Integriertes Kombiinstrument nach Anspruch 4, dadurch gekennzeichnet, daß Bauteile der Karosseriezentralelektronik und/oder Karosserieleistungselektronik und/oder die Sicherungseinrichtung (50) auf der dem Fahrgastraum abgewandten Seite der Leiterplatte angebracht sind.

6. Integriertes Kombiinstrument nach einem der vorhergehenden Ansprüche, dadurch gekennzeichnet, daß die Sicherungseinrichtung (50) einen Polyswitch aufweist.

7. Integriertes Kombiinstrument nach einem der vorhergehenden Ansprüche, dadurch gekennzeichnet, daß die Sicherungseinrichtung (50) in einen Halbleiterschalter für die Last integriert ist.

8. Integriertes Kombiinstrument nach Anspruch 7, dadurch gekennzeichnet, daß der Halbleiterschalter einen Highsideschalter mit einer Diagnosefunktion aufweist.

9. Integriertes Kombiinstrument nach einem der vorhergehenden Ansprüche, dadurch gekennzeichnet, daß die Sicherungseinrichtung (50) durch ein elektronisches Steuersignal, vorzugsweise von einem Bordcomputer (100), heilbar ist.

10. Integriertes Kombiinstrument nach einem der Ansprüche 1 bis 8, dadurch gekennzeichnet, daß die Sicherungseinrichtung (50) durch eine Selbstheilungsfunktion heilbar ist.

11. Integriertes Kombiinstrument nach einem der vorhergehenden Ansprüche, dadurch gekennzeichnet, daß sämtliche benötigten Sicherungseinrichtungen (50) darin vorgesehen sind.
